Europäisches Patentamt

**European Patent Office**

**Office européen des brevets**

(19)

(11) Numéro de publication: **0 036 837**
A1

(12) **DEMANDE DE BREVET EUROPEEN**

(21) Numéro de dépôt: **81810088.5**

(22) Date de dépôt: **10.03.81**

(51) Int. Cl.³: **G 02 C 5/22**

(30) Priorité: **26.03.80  CH 2368/80**

(43) Date de publication de la demande: **30.09.81**
**Bulletin 81/39**

(84) Etats contractants désignés: **AT DE FR IT**

(71) Demandeur: **LA NATIONALE S.A., 2 Rue des Falaises, CH-1211 Geneve 8 (CH)**

(72) Inventeur: **Beyer, Karl, 49, av. de Vaudagne, CH-1217 Meyrin-Genève (CH)**

(74) Mandataire: **Ardin, Pierre et al, PIERRE ARDIN & CIE 22, rue du Mont-Blanc, CH-1211 Geneve 1 (CH)**

(54) **Charnière de lunettes.**

(57)    La charnière de lunettes comprend 2 charnons (3 et 4) pour assurer l'articulation d'une branche (1) sur la monture (2). Une pièce intermédiaire (5) est fixée sur le charnon (3) par une vis (6) et présente une portion (11) formant came pour un élément élastique (12) du charnon (4). Ce dernier est articulé sur la pièce (5) par une vis passant dans un trou (10).

En enlevant la pièce (5), on peut articuler sur le charnon (3) un charnon classique pour obtenir une charnière simple, c'est-à-dire ne présentant pas de moyens de rappel élastique.

EP 0 036 837 A1

-1-

## CHARNIERE DE LUNETTES

Les charnières de lunettes comprennent deux charnons
articulés l'un à l'autre au moyen d'une vis formant pivot. On connaît également des charnières de lunettes,
dites élastiques, dans lesquelles un élément élastique
monté sur un charnon coopère avec une portion en forme
de came de l'autre charnon. Une charnière de ce genre
est, par exemple, décrite dans le brevet américain numéro 4.005.930.

Pour tenir compte des désirs de la clientèle, les marchands doivent avoir à disposition des mêmes montures
de lunettes équipées de charnières d'un type et de l'autre.

La présente invention a pour but de diminuer le nombre
de pièces qu'un marchand doit avoir en stock .A cet effet, l'invention a pour objet une charnière de lunettes
comprenant deux charnons, caractérisée en ce qu'elle
comprend une pièce intermédiaire amovible présentant
des moyens pour la fixer rigidement à un premier charnon, cette pièce présentant un trou pour recevoir un pivot d'articulation au second charnon et une portion formant une came pour coopérer avec un élément élastique de ce second charnon, pour former une charnière dite élastique.

Le dessin annexé représente schématiquement et à titre d'exemple, une forme d'exécution de la charnière faisant l'objet de l'invention.

La figure 1 est une coupe partielle de cette charnière en version élastique, la branche de lunettes étant en position ouverte.

La figure 2 est une vue correspondante avec la branche en position repliée.

La figure 3 est une vue en plan de cette charnière, montée de façon classique.

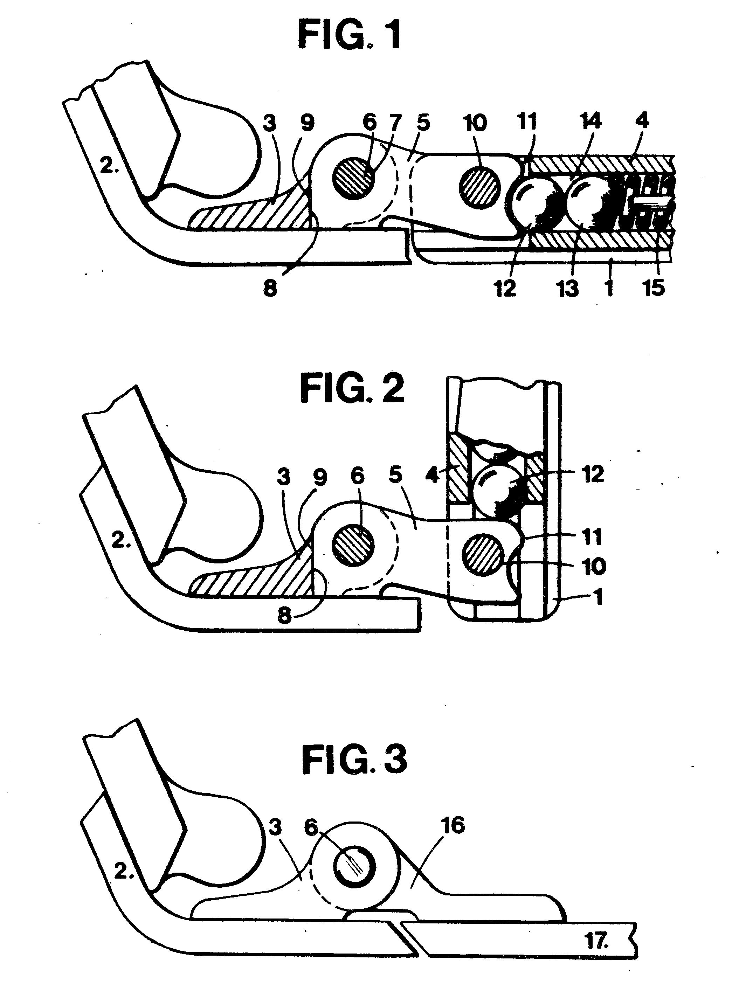

En référence aux figures 1 et 2, une branche de lunettes 1 est articulée sur une monture 2 par l'intermédiaire d'une charnière comprenant un charnon de monture 3 et un charnon de branche 4.

Le charnon 3 est complété par une pièce intermédiaire 5 qui est montée de façon amovible sur ce charnon au moyen d'une vis 6 passant dans les trous d'articulation du charnon 3 et dans un trou 7 de la pièce 5. Cette dernière présente un plat 8 destiné à prendre appui contre un plat 9 du charnon 3, ces deux plats étant agencés pour interdire une rotation de la pièce intermédiaire 5 par rapport au charnon 3 autour de la vis 6.

La pièce 5 comprend encore un trou d'articulation 10, ainsi qu'une portion formant une came 11 pour coopérer avec un élément élastique monté sur le charnon 4.Cet élément élastique est constitué par deux billes 12 et 13 disposées dans un logement cylindrique 14 du charnon 4 et soumises à l'action d'un ressort 15 également disposé dans ce logement. Le ressort 15 a pour effet de pousser la bille 12 contre la came 11 pour maintenir la branche 1, soit dans la position ouverte illustrée à la figure 1, soit dans la position repliée, représentée à la figure 2.

Lorsqu'un usager désire une charnière classique, il suffit de retirer la vis 6 pour séparer la pièce intermédiaire 5 du charnon 3. A ce moment, et comme illustré à la figure 3, le charnon 3 est prêt à recevoir un charnon conventionnel 16 d'une branche 17 pour constituer une charnière classique.

On peut bien entendu prévoir différentes variantes de réalisation. En particulier, la fixation de la pièce intermédiaire 5 sur le charnon pourrait être obtenue par un rivet, au lieu de la vis 6, ou de façon plus générale par toute pièce jouant le rôle d'une cheville. Le blocage en position angulaire de la pièce intermédiaire pourrait être obtenu par coopération de celle-ci directement avec là monture, par exemple avec un plat de cette dernière. Cette possibilité est d'ailleurs visible au dessin, en combinaison avec les plats 8 et 9 du charnon et de la pièce intermédiaire. Le maintien en position angulaire de la pièce intermédiaire sur le premier charnon pourrait aussi être obtenu par d'autres moyens que les plats 8 et 9. Ainsi, on pourrait agencer le charnon 3 et la pièce intermédiaire 5 pour qu'ils soient fixés

-4-

l'un à l'autre par deux vis. On pourrait aussi prévoir des portions en creux et en saillie s'engageant mutuellement entre le charnon 3, et/ou la monture 2, et la pièce intermédiaire 5 pour empêcher toute rotation entre ces deux pièces.

REVENDICATIONS

1. Charnière de lunettes comprenant deux charnons, caractérisée en ce qu'elle comprend une pièce intermédiaire amovible présentant des moyens pour la fixer rigidement à un premier charnon, cette pièce présentant un trou pour recevoir un pivot d'articulation au second charnon et une portion formant une came pour coopérer avec un élément élastique de ce second charnon, pour former une charnière dite élastique.

2. Charnière selon la revendication 1, caractérisée en ce que les moyens pour la fixation rigide de la pièce intermédiaire au premier charnon comprennent un trou pour le passage d'une cheville engagée dans les trous d'articulation du premier charnon.

3. Charnière selon la revendication 2, caractérisée en ce que la pièce intermédiaire présente un plat destiné à prendre appui contre un plat correspondant du premier charnon et/ou de la monture et disposé pour interdire sa rotation autour de la vis.

- 1/1 -

0036837

## FIG. 1

## FIG. 2

## FIG. 3

**0036837**

Numéro de la demande

**EP 81 81 0088**

Office européen
des brevets

**RAPPORT DE RECHERCHE EUROPEENNE**

| Catégorie | Citation du document avec indication, en cas de besoin, des parties pertinentes | Revendication concernée | CLASSEMENT DE LA DEMANDE (Int. Cl.³) |
|---|---|---|---|
| | **DOCUMENTS CONSIDERES COMME PERTINENTS** | | |
| | FR - A - 2 043 881 (LEVRIER HENRI ET PLAISANTIN RENE)<br><br>* Pages 5 et 6 *<br>--- | | G 02 C 5/22 |
| A | FR - A - 2 140 924 (PITTION MAX)<br><br>* En entier *<br>--- | | |
| A | DE - A - 1 297 355 (WINTER OPTIK GmbH)<br><br>* En entier *<br><br>---------- | | **DOMAINES TECHNIQUES RECHERCHES** (Int. Cl.³)<br><br>G 02 C 5/22 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22.06.1981 | TREVETIN |

OEB Form 1503.1  06.78